# EUROPÄISCHE PATENTANMELDUNG

(11) **EP 3 172 972 A1**
(43) Veröffentlichungstag der Anmeldung: **31.05.2017**
(21) Anmeldenummer: 16193613.3
(22) Anmeldetag: 13.10.2016
(51) Int. Cl.: A23L 13/50, A23L 13/60, A21D 13/00

(54) **LEBERKÄSE-BURGER**

(30) Priorität: 27.11.2015 DE 202015008243 U
(71) Anmelder: Andreas Sommerkorn GmbH, 80687 München (DE)
(72) Erfinder: Sommerkorn, Andreas, 81249 München (DE)
(74) Vertreter: Bockhorni & Kollegen

(57) **Zusammenfassung**

Bei Burger mit durchteilter Semmel und mindestens einer zwischen den Semmelhälften angeordneten Zwischenlage auf Fleischbasis ist die Zwischenlage aus Leberkäsbrät gebildet, dem eine Mischung aus Gewürzen, insbesondere Salz und Pfeffer, beigegeben ist, wobei die Zwischenlage vorgedämpft und für den Verzehr gebraten oder frittiert ist.

## Beschreibung

Die Erfindung betrifft einen Burger gemäß Oberbegriff des Anspruches 1.

Burger sind als warme Schnell- oder Fertiggerichte bekannt, beliebt und verbreitet. Diese sind regelmäßig im Produktsortiment von Fast-Food-Ketten, wie McDonald's oder Burger King als Hauptprodukt erhältlich und haben hohe Marktakzeptanz.

Ein Burger umfasst üblicherweise eine in zwei Hälften geteilte Semmel, welche die äußeren Schichten des Burgers ausbildet. Dazwischen werden verschiedene Beläge als Lagen, wie Käsescheiben, gegrillte Scheibe aus Rinderhackfleisch, Gurkenscheiben und Zwiebelscheiben eingelegt, welche mit einer Sauce wie Ketschup oder Senf verfeinert werden.

Da derartige Burger sich im steten Wechselspiel mit anderen Schnellgerichten und Imbissen befinden, ist ein zentraler Aspekt darin zu sehen, derartige Burger stets weiter zu verbessern.

Es ist daher Aufgabe der vorliegenden Erfindung, einen Burger bereitzustellen, der in seiner Konsistenz stabil ist, sich einfach handeln lässt, und auch die Herstellzeit des Burgers zu verkürzen, insbesondere ein Produkt bereitzustellen, das sich tiefkühlen und jederzeit schnell und einfach zu einem Burger bereitstellen lässt.

Diese Aufgabe wird dadurch gelöst, dass die Zwischenlage des Burgers aus Leberkäsbrät gebildet ist, dem eine Mischung aus Gewürzen, insbesondere Salz und Pfeffer beigegeben ist, wobei die Zwischenlage vorgedämpft und für den Verzehr gebraten oder frittiert ist. Aufgrund des vorgedämpften Leberkäsbräts ist dieser besonders formstabil. Die gebratene oder frittierte Leberkäsemasse aufweisend eine Mischung aus Gewürzen weist eine harte Außenschicht auf, die gewährleistet, dass alle Zutaten im Inneren beziehungsweise im Kern der Zwischenlage kompakt aufbewahrt bleiben.

Die Zwischenlage, welche aus Leberkäsbrät gebildet ist, kann eine Käsebeigabe enthalten. Der Geschmack wird dadurch verfeinert. Vorteilhaft ist unter der Käseauswahl ein Bergkäse, da dieser sehr würzig ist. Vorzugsweise wird der Käse in geraspelter oder geriebener Form beigegeben. Der Käse vermengt sich dadurch besonders gut mit der Leberkäsbrätmasse, die dadurch eine besondere Würze erhält. Eine weiter bevorzugte Käsesorte ist Allgäuer Emmentaler. Dieser ist besonders gut geeignet und verteilt sich hervorragend in der Leberkäsbrätmasse. Bergkäse und Allgäuer Emmentaler binden sich besonders gut in die Fleischmasse ein.

Die Zwischenlage ist bevorzugt eine geknetete Masse aus Leberkäsbrät, der wahlweise Salz und Pfeffer und besonders bevorzugt weitere Zutaten, wie beispielsweise Käse, zugeführt sind. Aufgrund des Knetens vermengen sich die Ingredienzien hervorragend und es wird eine neue Art einer Zwischenlage für einen Burger bereitgestellt, die es als solches noch nicht gibt. Die eine Zwischenlage vereint nämlich vorzugsweise alle Zutaten, die zuvor als einzelne Lagen beigefügt waren, wie beispielsweise Käselage, Fleischlage, Zwiebelschicht und dgl., in einer Lage.

Die der Zwischenlage aus Leberkäsbrät zugefügte Gewürzmischung kann Salz und/oder Pfeffer aber auch exotische Gewürze, insbesondere Paprika und/oder Chili enthalten. Zudem können frische Kräuter in der Gewürzmischung enthalten sein. Besonders bevorzugt wird Rucola und/oder Petersilie und/oder Basilikum und/oder Thymian eingesetzt.

Bevorzugt umfasst das Leberkäsbrät folgendes: 55-75 % Schweinefleisch; 5-12 % Speck; 2 bis 7 Gew.-% Rindfleisch; Trinkwasser; Nitritpökelsalz: Kochsalz, Konservierungsstoff: Natriumnitrit; Glukosesirup; Stabilisator: E331; Geschmacksverstärker: E621; Antioxidationsmittel: E300, E316. Vorzugsweise sind dem Leberkäsbrät des Weiteren Gewürze, Gewürzextrakte und/oder Knoblauch beigefügt.

In einem besonders bevorzugten Ausführungsbeispiel umfasst das Leberkäsbrät die Zutaten: 66 Gew.-% Schweinefleisch; 8 Gew.-% Speck; 5 Gew.-% Rindfleisch; Trinkwasser; Nitritpökelsalz: Kochsalz, Konservierungsstoff: Natriumnitrit; Glukosesirup; Stabilisator: E331; Geschmacksverstärker: E621; Antioxidationsmittel: E300, E316. Vorzugsweise sind dem Leberkäsbrät des Weiteren Gewürze, Gewürzextrakte und/oder Knoblauch beigefügt.

In einem speziellen Ausführungsbeispiel umfasst die Leberkäsmasse 7 bis 14 Gew.-%, insbesondere 10 Gew.-% Käse bezogen auf die Gesamtmasse des Leberkäsbräts, 3 Gew.-% Kräuter und 3 Gew.-% Röstzwiebeln bezogen auf die Gesamtmasse des Leberkäsbräts. In einem besonders bevorzugten Beispiel fallen somit auf 3 kg Leberkäsemasse für die Zubereitung der Zwischenlage, welche anschließend portioniert wird, 7-14 %, insbesondere 10 Gew.-% Käse, 80-120 g, insbesondere 100 g Kräuter, wie beispielsweise Rucola und Thymian, sowie 80-120 g, insbesondere 100 g Röstzwiebeln.

Die Käsebeigabe kann im Verhältnis zu dem Gewicht der Zwischenlage, die ca. 150 - 190 g wiegt, in der Menge von 15 bis 19 Gramm erfolgen. Diese Menge der Käsebeigabe führt zu einer angenehm schmeckenden Komposition des Burgers.

Ein besonders bevorzugter Burger umfasst als Zwischenlage einen vorgedämpften und für den Verzehr gebratenen oder frittierten Leberkäsbrät mit einem Gewicht von 150 Gramm bis 190 Gramm, insbesondere 160 Gramm bis 180 Gramm mit bevorzugt 4,5 Gramm bis 5,7 Gramm Gewürzmischung. Diese Menge an Gewürzmischung ist sehr gut geeignet, sich in der Masse zu verteilen. Zudem führt diese Menge zu der angenehmsten Würze des Leberkäsbräts im Burger.

Die Zwischenlage des Leberkäsbräts ist in einem besonders bevorzugten Ausführungsbeispiel als ein scheibenförmiger Rohling vorgedämpft. Aufgrund der Vordämpfung ist der scheibenförmige Rohling in seiner Konsistenz derart stabil, dass er sich hervorragend zur Aufbewahrung, auch als Tiefkühlprodukt, eignet. Hierzu ist der Rohling bei etwa 90 °C bis 110 °C vorgedämpft. Besonders bevorzugt beträgt die Gastemperatur 100 °C.

Der Rohling wiegt bevorzugt 150 bis 190 g, insbesondere 160 bis 180 g. Aufgrund des Gewichts ist der Rohling besonders gut geeignet, zwischen zwei Semmelhälften eingelegt zu werden. Zudem ist es bei diesem Gewicht am einfachsten, den Leberkäsbrät mitsamt seinen Zutaten in eine Scheibenform zu bringen. Bei einem höheren Gewicht würde die Masse nicht mehr komplett durchgaren und damit keine Tiefkühlaufbewahrung möglich sein.

Ein besonders bevorzugter Burger umfasst eine Sauce auf Basis von Schmand, Joghurt, Creme fraiche und/oder Sauerrahm. Der Geschmack wird dadurch zusätzlich verbessert, insbesondere auch die Feuchtigkeit des Burgers erhöht, sodass die Semmelhälften gut verdaulich sind. Zwischen den beiden Semmelhälften des Burgers lagern nur noch eine Sauce und die Zwischenlage. Vorteilhafterweise kann die Sauce auf der Zwischenlage nicht mehr seitlich überlaufen, weil die Zwischenlage eine äußere raue Schicht aufweist, welche einen hohen Reibungswiderstand für die Sauce bereitstellt.

Zudem wird die obige Aufgabe dadurch gelöst, dass ein Rohling für einen Burger bereitgestellt wird, der sich durch wenigstens ein auf die Zwischenlage bezogenes Merkmal, wie in den obigen Ausführungsbeispielen beschrieben, auszeichnet.
- Figur 1: zeigt einen Burger mit einer Zwischenlage ohne Sauce
- Figur 2: zeigt einen Querschnitt der Zwischenlage des Leberkäsbräts mit einer Gewürzmischung

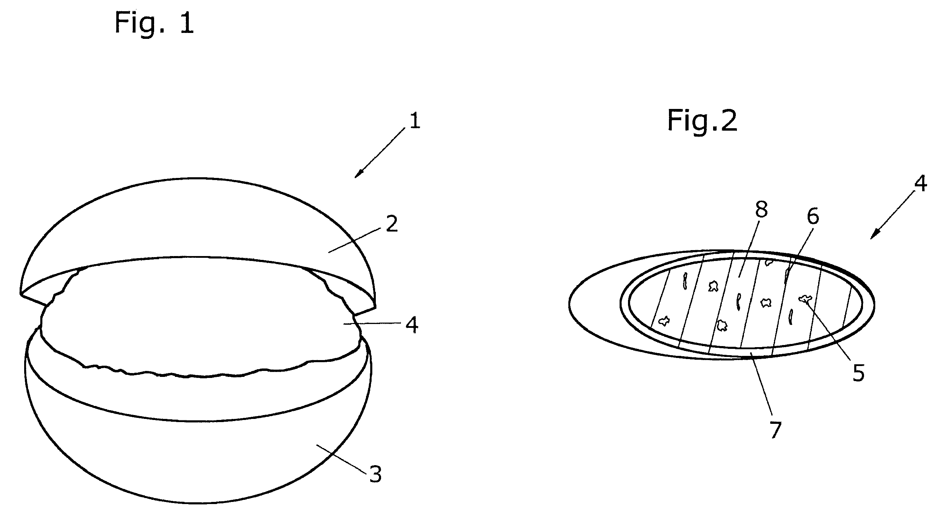

In Figur 1 ist ein Burger 1 aus zwei Semmelhälften 2, 3 mit einer Zwischenlage 4 aus Leberkäsbrät dargestellt. Die obere Semmelhälfte 2 liegt dabei direkt auf der Zwischenlage 4 auf und auch die untere Semmelhälfte 3 grenzt direkt an die Zwischenlage 4 von unten her an. Zwischen den zwei Semmelhälften 2 und 3 befindet sich somit nur eine einzige Zwischenlage 4. Die Zwischenlage ist in diesem Ausführungsbeispiel kleiner als der Durchmesser der Semmel in Schnittrichtung, so dass die Zwischenlage nicht aus der Semmel heraus vorsteht. Dies hat den Vorteil, dass bei Zufügung einer Sauce beispielsweise aus Schmand oder Joghurt, diese nicht über den äußeren Rand der Zwischenlage überläuft. Der Burger kann daher sehr gut verzehrt werden, ohne dass die Sauce auf die Kleidung oder in der Nähe befindliche Gegenstände tropft.

Figur 2 zeigt eine Zwischenlage 4 in Schnittansicht. Aus dieser Schnittansicht sind die zugefügten Gewürze 6 und eine Käsebeigabe 5 ersichtlich. Bezugszeichen 7 zeigt die äußere Schicht der Zwischenlage, welche härter ist als die in der Zwischenlage enthaltene Fleischmasse und in etwa 1 bis 5 mm beträgt. Die äußere Schicht 7 kann dadurch erzielt werden, dass die Zwischenlage vorgedämpft und anschließend frittiert oder in einer Pfanne gebraten wird.

## Patentansprüche

1. Burger mit durchteilter Semmel und mindestens einer zwischen den Semmelhälften angeordneten Zwischenlage auf Fleischbasis,
**dadurch gekennzeichnet, dass**
die Zwischenlage aus Leberkäsbrät gebildet ist, dem eine Mischung aus Gewürzen, insbesondere Salz und Pfeffer, beigegeben ist, wobei die Zwischenlage vorgedämpft und für den Verzehr gebraten oder frittiert ist.

2. Burger nach Anspruch 1,
**dadurch gekennzeichnet, dass**
die Zwischenlage auf Fleischbasis eine Käsebeigabe umfasst, insbesondere Bergkäse, vorzugsweise geraspelten oder geriebenen Bergkäse, besonders bevorzugt Allgäuer Emmentaler umfasst.

3. Burger nach einem der vorhergehenden Ansprüche 1 oder 2,
**dadurch gekennzeichnet, dass**
die Zwischenlage eine geknetete Masse ist.

4. Burger nach einem der vorhergehenden Ansprüche,
**dadurch gekennzeichnet, dass**
die Gewürzmischung in Pulverform eines oder eine Kombination der Gewürze: Salz, Pfeffer, Paprika, Chili, frische Kräuter, insbesondere Rucola und/oder Petersilie und/oder Basilikum und/oder Thymian enthält.

5. Burger nach einem der vorhergehenden Ansprüche,
**dadurch gekennzeichnet, dass**
die Zwischenlage Chili in Pulverform, in Flocken oder in kleine Teilestückchen umfasst.

6. Burger nach einem der vorhergehenden Ansprüche,
**dadurch gekennzeichnet, dass**
dem Leberkäsbrät Röstzwiebeln zugefügt sind, deren Menge zwischen 2 und 4 Gew.-%, insbesondere 3 Gew.-%, der Gesamtmasse des Leberkäsbräts beträgt.

7. Burger nach einem der vorgenannten Ansprüche,
**dadurch gekennzeichnet, dass**
zwischen 8 und 12 Gew.-%, insbesondere 10 Gew.-% Käse bezogen auf das Gesamtgewicht des Leberkäsbräts als Käsebeigabe in deren Zwischenlage enthalten sind.

8. Burger nach einem der vorhergehenden Ansprüche,
**dadurch gekennzeichnet, dass**
die Zwischenlage 1 bis 5 Gew.-%, insbesondere 2 bis 4 Gew.-%, besonders bevorzugt 3 Gew.-% Gewürzmischung bezogen auf das Gesamtgewicht des Leberkäsbräts enthält.

9. Burger nach einem der vorhergehenden Ansprüche,
**dadurch gekennzeichnet, dass**
die Zwischenlage geteilt und zwischen den zwei Hälften der Zwischenlage eine oder mehrere weitere Lagen, insbesondere Käsescheibe, Gurkenscheibe, Zwiebelringscheiben, eingelegt sind.

10. Burger nach einem der vorhergehenden Ansprüche,
**dadurch gekennzeichnet, dass**
die Zwischenlage zur Aufbewahrung bei etwa 90 °C bis 110 °C, insbesondere 100 °C als ein scheibenförmiger Rohling vorgedämpft ist.

11. Burger nach einem der vorhergehenden Ansprüche,
**dadurch gekennzeichnet, dass**
der Rohling 150 bis 190 g, insbesondere 160 bis 180 g wiegt.

12. Burger nach einem der vorhergehenden Ansprüche,
**dadurch gekennzeichnet, dass**
eine Sauce auf Basis von Schmand, Joghurt, Creme fraiche und/oder Sauerrahm beigegeben ist.

13. Rohling für einen Burger, insbesondere nach einem der vorhergehenden Ansprüche, **gekennzeichnet durch** wenigstens ein auf die Zwischenlage bezogenes Merkmal nach einem der Ansprüche 1 bis 9.
